(19) Europäisches Patentamt
European Patent Office
Office européen des brevets

(11) EP 4 108 451 A1

(12) # EUROPEAN PATENT APPLICATION
published in accordance with Art. 153(4) EPC

(43) Date of publication:
**28.12.2022 Bulletin 2022/52**

(21) Application number: **21756881.5**

(22) Date of filing: **04.02.2021**

(51) International Patent Classification (IPC):
***B32B 27/00*** *(2006.01)* ***C08L 83/05*** *(2006.01)*
***C08L 83/07*** *(2006.01)* ***C08L 101/12*** *(2006.01)*
***C09D 183/07*** *(2006.01)* ***C09K 3/00*** *(2006.01)*
***C09D 7/61*** *(2018.01)* ***B32B 7/06*** *(2019.01)*

(52) Cooperative Patent Classification (CPC):
**B32B 7/06; B32B 27/00; C08L 83/04; C08L 101/12; C09D 7/61; C09D 183/04; C09K 3/00**

(86) International application number:
**PCT/JP2021/004007**

(87) International publication number:
**WO 2021/166653 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.02.2020 JP 2020024940**

(71) Applicant: **SHIN-ETSU CHEMICAL CO., LTD.**
**Tokyo 1000005 (JP)**

(72) Inventors:
- **ONOZAWA, Hayato**
  **Annaka-shi, Gunma 379-0224 (JP)**
- **KOBAYASHI, Ataru**
  **Annaka-shi, Gunma 379-0224 (JP)**
- **NAKAYAMA, Ken**
  **Annaka-shi, Gunma 379-0224 (JP)**

(74) Representative: **Mewburn Ellis LLP**
**Aurora Building**
**Counterslip**
**Bristol BS1 6BX (GB)**

(54) **SILICONE COMPOSITION FOR PRODUCING RELEASE PAPER OR RELEASE FILM, AND RELEASE PAPER AND RELEASE FILM**

(57) In the present invention, a silicone composition contains: organopolysiloxane in which the content of an alkenyl group having a specific structure is low; organopolysiloxane in which the content of an alkenyl group having a specific structure is high; organohydrogen polysiloxane that has no aryl group; and organohydrogen polysiloxane that has an aryl group and includes a SiH group in a large amount, at a specific content ratio. The silicone composition exhibits a small peeling force, and has excellent curability and adhesive properties.

EP 4 108 451 A1

## Description

### TECHNICAL FIELD

This invention relates to an addition-curable silicone composition for producing release paper or release film, and to release paper or release film obtained by formation of a cured product of the composition.

### BACKGROUND ART

Release coatings for adhesive or pressure-sensitive adhesive materials that are produced by applying a silicone-based release agent onto the surface of a substrate such as paper or plastic film and forming a cured coating via a crosslinking reaction are known to be used in release paper and release film.

Methods of forming a cured silicone coating on the surface of a substrate include, for example, the following methods described in Patent Documents 1 to 3.

(1) Forming a release coating by addition-reacting an alkenyl group-containing organopolysiloxane with an organohydrogenpolysiloxane using a platinum group compound as the catalyst (Patent Document 1: JP-A S47-32072).
(2) Forming a release coating by condensation-reacting an organopolysiloxane having functional groups such as hydroxyl groups or alkoxy groups using an organometallic salt as the catalyst (Patent Document 2: JP-B S35-13709).
(3) Forming a release coating by using ultraviolet radiation or electron beams to induce the radical polymerization of an acrylic group-containing organopolysiloxane with a photoreaction initiator (Patent Document 3: JP-A S54-162787).

Release films that use, as a substrate of excellent transparency and surface smoothness, a plastic film are commonly employed in optical applications and electrical/electronic component applications. Plastic film substrates have a poor heat resistance compared with paper, and so low-temperature curability is desired. Also, owing to improvements in the performance of adhesives and pressure-sensitive adhesives and the growing diversity in their applications, the need for all sorts of release properties must be addressed. Addition reactions are often used to form cured silicone coatings.

Given the tendency in recent years to use plastic film substrates having a small substrate thickness, it has become necessary to form the coating under low-temperature, short-time curing conditions. Hence, improvements in the curability of silicone compositions are strongly desired.

There is also a trend in release film applications toward thinner cured coatings of silicone composition. But as such cured coatings become thinner, it is increasingly difficult to achieve sufficient releasability, making it necessary to lower the release force.

In addition, given that the curing conditions are low-temperature and short-time, adherence also is concern. A plastic film substrate has a smooth surface, making it difficult for a silicone composition to adhere; as the curing temperature of the composition becomes lower and the curing time shorter, adherence to the substrate becomes more difficult. For this reason, an improvement in adherence is also required.

Art for improving the curability and release properties of silicone compositions has hitherto been proposed. For example, JP-A HI 1-193366 (Patent Document 4) discloses, as a method for modifying the base polymer structure of the silicone composition, the approach of imparting a branched structure which includes $RSiO_{3/2}$ units (R being a monovalent hydrocarbon group, etc.). Such methods are intended to provide a releasability enhancing effect when release is carried out at a high speed; the only observable secondary effect is an improvement in curability.

In JP No. 6418326 (Patent Document 5), by compounding specific amounts of a base polymer having an unsaturated group on the end and an alkenyl group-containing organopolysiloxane that is of a lower molecular weight than the base polymer and has an unsaturated bond on the end, a good curability is exhibited, enabling the formation of a cured coating having a low release force. However, further improvement in the curability is needed, and an improvement in the adherence is also necessary.

Also, plastic substrates are prone to electrostatic charging and tend to charge even more readily when coated with a silicone release agent, generating static electricity from friction or peeling and giving rise to a number of problems: static charging of pressure-sensitive adhesives, adsorption of foreign matter and decreased workability. For this reason, in electronic component applications, it has also been proposed that an antistatic agent be included in the silicone compositions to impart antistatic properties.

For example, JP No. 6324250 (Patent Document 6) states that, by using an oxirane or oxetane compound during the phase inversion of a $\pi$-conjugated conductive polymer from an organic phase, curing inhibition can be suppressed, improving the curability of the silicone composition. However, antistatic agents not only adversely affect the curability, they also lower the adherence. Given the increasing diversification in the use of release agents, it is desired

that, even when an antistatic agent is included in this way, the silicone composition exhibit good adherence. However, conventional silicone compositions have an inadequate adherence, and so there exists a strong desire for improved adherence of the silicone composition.

Hence, the art to date lacks silicone compositions which have a small release force, exhibit a good curability and possess an excellent adherence. As methods for the use of release agents broaden in scope, silicone compositions which have an excellent adherence even when they include an antistatic agent are needed.

PRIOR ART DOCUMENTS

PATENT DOCUMENTS

Patent Document 1: JP-A S47-32072
Patent Document 2: JP-B S35-13709
Patent Document 3: JP-A S54-162787
Patent Document 4: JP-A H11-193366
Patent Document 5: JP No. 6418326
Patent Document 6: JP No. 6324250

SUMMARY OF INVENTION

TECHNICAL PROBLEM

The present invention was arrived at in view of the above circumstances. The object of the invention is to provide an addition-curable silicone composition for producing release paper or release film, which composition exhibits a small release force with respect to various types of pressure-sensitive adhesives, has a good curability and gives a cured coating of excellent adherence. Another object is to provide release paper or release film obtained by coating such a composition onto a substrate and curing the composition.

SOLUTION TO PROBLEM

The inventors have conducted intensive investigations aimed at achieving the above objects. As a result, they have found that the cured form of a silicone composition which includes in a specific ratio an organopolysiloxane of a low alkenyl group content that has a specific structure, an organopolysiloxane of a high alkenyl group content that has a specific structure, an organohydrogenpolysiloxane that has no aryl groups and an organohydrogenpolysiloxane that has aryl groups and a high SiH group content possesses a smaller release force with respect to pressure-sensitive adhesives and has an excellent curability and adherence. Moreover, even when an antistatic agent is included in this silicone composition, a cured coating of the composition exhibits an excellent adherence.

Accordingly, this invention provides the following addition-curable silicone composition for producing release paper or release film, and also provides the following release paper or release film.

[1] An addition-curable silicone composition for producing release paper or release film, which composition includes:

(A) 100 parts by weight of an organopolysiloxane of formula (1) below

[Chem. 1]

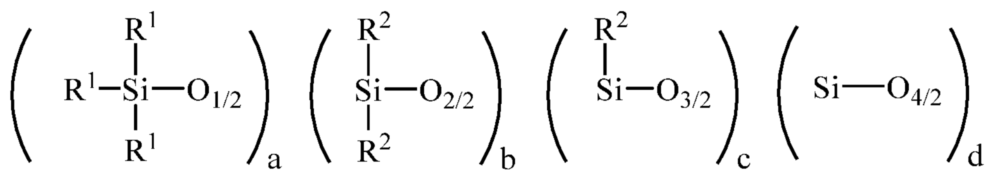

(1)

(wherein $R^1$ are like or unlike alkenyl groups of 2 to 12 carbon atoms which may have an intervening oxygen atom, $R^2$ are like or unlike groups selected from substituted or unsubstituted monovalent hydrocarbon groups

of 1 to 20 carbon atoms which have no aliphatic unsaturated bonds and alkenyl groups of 2 to 12 carbon atoms which may have an intervening oxygen atom, and the subscripts 'a' to 'd' are integers which respectively satisfy the conditions $2 \leq a \leq 30$, $400 \leq b \leq 20,000$, $0 \leq c \leq 20$ and $0 \leq d \leq 15$) which has an alkenyl group content of from 0.001 to 0.03 mol/100 g and a viscosity at 25°C as a 30 wt% toluene solution of from 0.01 to 70 Pa·s;
(B) from 0.1 to 20 parts by weight of an organopolysiloxane of formula (2) below

[Chem. 2]

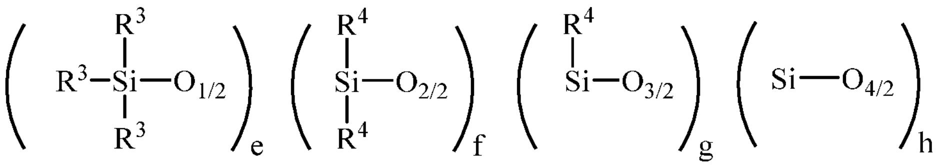
(2)

(wherein $R^3$ are like or unlike groups selected from substituted or unsubstituted monovalent hydrocarbon group of 1 to 20 carbon atoms which have no aliphatic unsaturated bonds and alkenyl groups of 2 to 12 carbon atoms which may have an intervening oxygen atom, at least two occurrences of $R^3$ being alkenyl groups of 2 to 12 carbon atoms which may have an intervening oxygen atom, $R^4$ are like or unlike substituted or unsubstituted monovalent hydrocarbon groups of 1 to 20 carbon atoms which has no aliphatic unsaturated bonds, and the subscripts 'e' to 'h' are integers which respectively satisfy the conditions $2 \leq e \leq 30$, $0 \leq f \leq 60$, $0 \leq g \leq 20$ and $0 \leq h \leq 10$) which has at least two alkenyl groups per molecule, an alkenyl group content of from 0.1 to 1.0 mol/100 g and a viscosity at 25°C of from 0.001 to 1 Pa·s;
(C) an organohydrogenpolysiloxane which has at least three silicon-bonded hydrogen atoms per molecule and no aryl groups, in an amount such that the ratio of the number of SiH groups on component (C) to the total number of alkenyl groups in components (A) and (B) is from 0.1 to 5;
(D) an organohydrogenpolysiloxane having at least three silicon-bonded hydrogen atoms per molecule and an aryl group, the ratio of the total number of the aryl groups to the total number of all substituents bonded to silicon atoms being from 6 to 50%, and having a SiH group content of at least 0.7 mol/100 g and not more than 2.0 mol/100 g, in an amount such that the ratio of the number of SiH groups in component (D) to the total number of alkenyl groups in components (A) and (B) is from 0.1 to 5;
(E) a catalytic amount of a platinum group metal catalyst; and
(F) from 50 to 20,000 parts by weight of an organic solvent.

[2] The addition-curable silicone composition for producing release paper or release film of [1] above, wherein the amount of SiH groups in component (C) is at least 0.7 mol/100 g and not more than 2.0 mol/100 g.
[3] The addition-curable silicone composition for producing release paper or release film of [1] or [2] above, wherein $R^1$ in component (A) is an alkenyl group of 2 to 8 carbon atoms.
[4] The addition-curable silicone composition for producing release paper or release film of [3] above, wherein $R^1$ in component (A) is a vinyl group.
[5] The addition-curable silicone composition for producing release paper or release film of any of [1] to [4] above, further including (G) an antistatic agent.
[6] The addition-curable silicone composition for producing release paper or release film of [5] above, wherein component (G) is a conductive polymeric compound.
[7] Release paper or release film obtained by formation of a cured product of the silicone composition of any of [1] to [6] above on a paper substrate or film substrate.

## ADVANTAGEOUS EFFECTS OF INVENTION

In the release paper or release film obtained using the silicone composition of the invention, the composition has an excellent curability, a small release force can be obtained, and the adherence is good. Moreover, an excellent adherence is exhibited even when an antistatic agent is included in the composition.

## DESCRIPTION OF EMBODIMENTS

The invention is described in detail below.

The inventive addition-curable silicone composition for producing release paper or release film (also abbreviated below as the "silicone composition") is a composition that includes components (A) and (F) below and cures by way of an addition reaction.

[Component (A)]

Component (A) is an organopolysiloxane of formula (1) below which has an alkenyl group content of from 0.001 to 0.03 mol/100 g and a viscosity at 25°C as a 30 wt% toluene solution of from 0.01 to 70 Pa·s.

[Chem. 3]

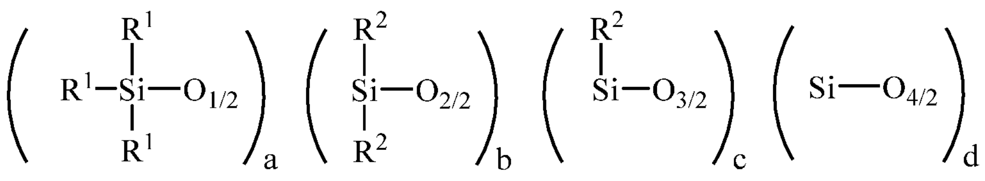

(1)

In the formula, $R^1$ are like or unlike alkenyl groups of 2 to 12 carbon atoms which may have an intervening oxygen atom; $R^2$ are like or unlike groups selected from substituted or unsubstituted monovalent hydrocarbon groups of 1 to 20 carbon atoms which have no aliphatic unsaturated bonds and alkenyl groups of 2 to 12 carbon atoms which may have an intervening oxygen atom; and the subscripts 'a' to 'd' are integers which respectively satisfy the conditions $2 \le a \le 30$, $400 \le b \le 20,000$, $0 \le c \le 20$ and $0 \le d \le 15$.

In formula (1), $R^1$ are like or unlike alkenyl groups of 2 to 12 carbon atoms which may have an intervening oxygen atom. $R^2$ are like or unlike groups selected from substituted or unsubstituted monovalent hydrocarbon groups of 1 to 20 carbon atoms which have no aliphatic unsaturated bonds and alkenyl groups of 2 to 12 carbon atoms which may have an intervening oxygen atom.

Specific examples of the substituted or unsubstituted monovalent hydrocarbon groups of 1 to 20 carbon atoms which have no aliphatic unsaturated bonds include alkyl groups of preferably from 1 to 6 carbon atoms, such as methyl, ethyl, propyl and butyl groups; cycloalkyl groups of preferably 5 to 8 carbon atoms, such as the cyclohexyl group; aryl groups of preferably 6 to 10 carbon atoms, such as phenyl and tolyl groups; aralkyl groups of preferably 7 to 10 carbon atoms, such as the benzyl group; and monovalent hydrocarbon groups of 1 to 10 carbon atoms selected from any of these groups in which some or all hydrogen atoms bonded to carbon atoms are substituted with hydroxyl groups, cyano groups, halogen atoms or the like, such as hydroxypropyl, cyanoethyl, 1-chloropropyl and 3,3,3-trifluoropropyl groups. From the standpoint of the release properties, alkyl groups and aryl groups are preferred, methyl, ethyl and propyl groups are more preferred, and methyl groups are even more preferred.

The alkenyl groups of 2 to 12 carbon atoms which may have an intervening oxygen atom are preferably groups of the formula $-(CH_2)_n-CH=CH_2$ (wherein n is an integer from 0 to 10). Specific examples include vinyl, propenyl, butenyl, hexenyl, octenyl and decenyl groups. The methylene chain may include an ether bond; examples of such groups include $-(CH_2)_2-O-CH_2-CH=CH_2$ and $-(CH_2)_3-O-CH_2-CH=CH_2$. Of these, vinyl, hexenyl and octenyl groups are preferred; a vinyl group is more preferred. In particular, $R^1$ is preferably an alkenyl group of 2 to 8 carbon atoms, and is more preferably a vinyl group.

The alkenyl group content of component (A) is from 0.001 to 0.03 mol/100 g, and more preferably from 0.002 to 0.02 mol/100 g. At an alkenyl group content of less than 0.001 mol/100 g, the curability may decrease; at more than 0.03 mol/100 g, release becomes tighter.

Component (A) has a viscosity at 25°C, as a 30 wt% toluene solution, that is from 0.01 to 70 Pa·s, and preferably from 0.02 to 50 Pa·s. At less than 0.01 Pa·s, the coatability when rendered into a composition is insufficient; at more than 70 Pa·s, the workability of the composition decreases. The viscosity, which can be measured with a Brookfield-type rotational viscometer, is the absolute viscosity value at 25°C as measured using, for example, a BII-type viscometer, a TVB-10 type viscometer (Toki Sangyo Co., Ltd.) or the like. The rotor, rotational speed and rotation time are suitably selected in the usual manner according to the viscosity (the same applies below).

The subscripts a, b, c and d in formula (1) are selected from positive numbers that set the viscosity within the above range, with 'a' being an integer from 2 to 30, preferably from 2 to 20, 'b' being an integer from 400 to 20,000, preferably from 500 to 15,000, 'c' being an integer from 0 to 20, preferably from 0 to 10, and 'd' being an integer from 0 to 15, preferably from 0 to 5, such that $402 \le a+b+c+d \le 20,002$, and preferably $500 \le a+b+c+d \le 15,000$.

Specific, non-limiting, examples of component (A) are given below. In the formulas below, Me, Vi and Ph stand

for, respectively, methyl, vinyl and phenyl groups. The bonding order of the siloxane units shown in parentheses is not limited to those shown below.

$(Vi_3SiO_{1/2})_2(Me_2SiO_{2/2})_{1,000}$

$(Vi_3SiO_{1/2})_2(Me_2SiO_{2/2})_{1,000}(Ph_2SiO_{2/2})_{10}$

$(Vi_3SiO_{1/2})_2(Me_2SiO_{2/2})_{2,000}(MeSiO_{3/2})_1$

$(Vi_3SiO_{1/2})_2(ViMeSiO_{2/2})_{24}(Me_2SiO_{2/2})_{4,000}$

$(Vi_3SiO_{1/2})_2(ViMeSiO_{2/2})_{40}(Me_2SiO_{2/2})_{4,000}(Ph_2SiO_{2/2})_{10}$

$(Vi_3SiO_{1/2})_4(ViMeSiO_{2/2})_{40}(Me_2SiO_{2/2})_{8,000}(MeSiO_{3/2})_2$

[Component (B)]

Component (B) is an organopolysiloxane of formula (2) below which has at least two alkenyl groups per molecule, an alkenyl group content of from 0.1 to 1.0 mol/100 g and a viscosity at 25°C of from 0.001 to 1 Pa·s.

[Chem. 4]

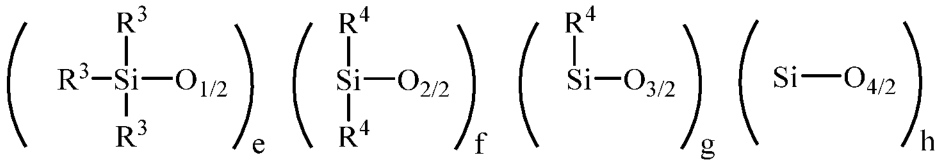

(2)

In the formula, $R^3$ are like or unlike groups selected from substituted or unsubstituted monovalent hydrocarbon groups of 1 to 20 carbon atoms which have no aliphatic unsaturated bonds and alkenyl groups of 2 to 12 carbon atoms which may have an intervening oxygen atom, at least two occurrences of $R^3$ being alkenyl groups of 2 to 12 carbon atoms which may have an intervening oxygen atom; $R^4$ are like or unlike substituted or unsubstituted monovalent hydrocarbon groups of 1 to 20 carbon atoms which have no aliphatic unsaturated bonds; and the subscripts e to h are integers which respectively satisfy the conditions $2 \leq e \leq 30$, $0 \leq f \leq 60$, $0 \leq g \leq 20$ and $0 \leq h \leq 10$).

In formula (2), $R^3$ are like or unlike groups selected from substituted or unsubstituted monovalent hydrocarbon groups of 1 to 20 carbon atoms which do not have aliphatic unsaturated bonds and alkenyl groups of 2 to 12 carbon atoms which may have an intervening oxygen atom, at least two occurrences of $R^3$ being alkenyl groups of 2 to 12 carbon atoms which may have an intervening oxygen atom, and $R^4$ are like or unlike substituted or unsubstituted monovalent hydrocarbon groups of 1 to 20 carbon atoms which have no aliphatic unsaturated bonds.

Specific examples of the substituted or unsubstituted monovalent hydrocarbon groups of 1 to 20 carbon atoms which have no aliphatic unsaturated bonds include alkyl groups of preferably 1 to 6 carbon atoms, such as methyl, ethyl, propyl and butyl groups; cycloalkyl groups of preferably 5 to 8 carbon atoms, such as the cyclohexyl group; aryl groups of preferably 6 to 10 carbon atoms, such as phenyl and tolyl groups; aralkyl groups of preferably 7 to 10 carbon atoms, such as the benzyl group; and monovalent hydrocarbon groups of 1 to 10 carbon atoms selected from any of these groups in which some or all hydrogen atoms bonded to carbon atoms are substituted with hydroxyl groups, cyano groups, halogen atoms or the like, such as hydroxypropyl, cyanoethyl, 1-chloropropyl and 3,3,3-trifluoropropyl groups. In particular, from the standpoint of releasability, alkyl groups and aryl groups are preferred, methyl, ethyl, propyl and phenyl groups are more preferred, and methyl groups are even more preferred.

The alkenyl groups of 2 to 12 carbon atoms which may have an intervening oxygen atom are preferably groups of the formula $-(CH_2)_n-CH=CH_2$ (wherein n is an integer from 0 to 10). Specific examples include vinyl, propenyl, butenyl, hexenyl, octenyl and decenyl groups. The methylene chain may include an ether bond; examples of such groups include $-(CH_2)_2-O-CH_2-CH=CH_2$ and $-(CH_2)_3-O-CH_2-CH=CH_2$. Of these, vinyl, hexenyl and octenyl groups are preferred; a vinyl group is more preferred.

The organopolysiloxane of component (B) has at least two alkenyl groups per molecule. At less than two, there is a strong possibility that uncrosslinked molecules will remain even after curing, resulting in decreased curability, which

is undesirable. The alkenyl group content is from 0.1 to 1.0 mol/100 g, and preferably from 0.15 to 0.8 mol/100 g. When this content is less than 0.1 mol/100 g, the curability may decrease; when it exceeds 1.0 mol/100 g, release may become tighter.

Component (B) has a viscosity at 25°C of from 0.001 to 1 Pa·s, and preferably from 0.002 to 0.8 Pa·s. When the viscosity at 25°C falls within this range, the curability is good.

The subscripts e, f, g and h in formula (2) are selected from positive numbers that set the viscosity within the above range, with 'e' being an integer from 2 to 30, preferably from 2 to 20, 'f' being an integer from 0 to 60, preferably from 0 to 48, 'g' being an integer from 0 to 20, preferably from 0 to 16, and 'h' being an integer from 0 to 10, preferably from 0 to 8, such that $2 \leq e+f+g+h \leq 62$, and preferably $4 \leq e+f+g+h \leq 50$.

Specific examples of component (B) include, but are not limited to, those shown below. In the formulas below, Me, Vi and Ph stand for, respectively, methyl, vinyl and phenyl groups. The bonding order of the siloxane units shown in parentheses is not limited to those shown below.

$(ViMe_2SiO_{1/2})_3(PhSiO_{3/2})_1$
$(ViMe_2SiO_{1/2})_{12}(MeSiO_{3/2})_{10}$
$(ViMe_2SiO_{1/2})_6(SiO_{4/2})_2$
$(ViMe_2SiO_{1/2})_2(Me_2SiO_{2/2})_{10}$
$(Vi_3SiO_{1/2})_2(Me_2SiO_{2/2})_{15}$
$(ViMe_2SiO_{1/2})_3(Me_2SiO_{2/2})_{20}(MeSiO_{3/2})_1$

Component (B) is included in an amount of from 0.1 to 20 parts by weight, preferably from 0.3 to 15 parts by weight, and more preferably from 0.5 to 10 parts by weight, per 100 parts by weight of component (A). When the component (B) content is lower than this range, the curability may decrease; when it is higher, the release force may increase.

[Component (C)]

Component (C) is an organohydrogenpolysiloxane which has at least three silicon-bonded hydrogen atoms per molecule and no aryl groups. The organohydrogenpolysiloxane may be of one type used alone or two or more may be used together.

The organohydrogenpolysiloxane (C) is represented by, for example, average empirical formula (3) below

$$R^5_iH_jSiO_{(4-i-j)/2} \qquad (3)$$

(wherein each $R^5$ is independently a hydroxyl group or a substituted or unsubstituted alkyl group; and the subscripts i and j are positive numbers larger than 0, such that $0 < i+j \leq 3$).

In formula (3), examples of the substituted or unsubstituted alkyl group represented by $R^5$ include alkyl groups of preferably 1 to 6 carbon atoms such as methyl, ethyl, propyl and butyl groups; cycloalkyl groups of preferably 5 to 8 carbon atoms such as the cyclohexyl group; and alkyl groups of 1 to 10 carbon atoms in which some or all hydrogen atoms bonded to carbon atoms on these groups are substituted with, for example, hydroxyl groups, cyano groups, halogen atoms, alkoxysilyl groups, polyoxyalkylene groups, epoxy groups or carboxyl groups. Of these, $R^5$ is preferably an unsubstituted alkyl group; from the standpoint of increasing the addition reaction rate, methyl, ethyl and propyl groups are more preferred.

In formula (3), the subscript i is a positive number that is greater than 0, preferably from 0.1 to 2 and the subscript j is a positive number that is greater than 0, preferably from 0.1 to 3, such that i and j satisfy the condition $0 < i+j \leq 3$, and preferably satisfy the condition $0.5 < i+j \leq 2.9$.

Component (C) has a viscosity at 25°C which is preferably from 0.001 to 10 Pa·s, and more preferably from 0.005 to 5 Pa·s. When the viscosity is too low, the curability may decrease; when it is too high, the ease of applying the composition may decrease.

The organohydrogenpolysiloxane (C) may be linear, branched or cyclic, or may be a mixture of these. The organohydrogenpolysiloxane is exemplified by polymers and copolymers containing, for example, at least one type of unit from among $R^5HSiO_{2/2}$ units, $HSiO_{3/2}$ units and $R^5_2HSiO_{1/2}$ units, and may additionally include at least one type of unit from among $R^5_2SiO_{2/2}$ units, $R^5SiO_{3/2}$ units and $R^5_3SiO_{1/2}$ units. $R^5$ is as described above. The sum of the $R^5HSiO_{2/2}$ units and $R^5_2HSiO_{1/2}$ units is preferably at least 3, and more preferably from 5 to 300, per molecule. Also, $SiO_{4/2}$ units may be included in an amount that does not detract from the advantageous effects of the invention.

The number of SiH groups in component (C) is such that the SiH group content is preferably at least 0.7 mol/100 g and not more than 2.0 mol/100 g, and more preferably at least 0.8 mol/100 g and not more than 1.8 mol/100 g. When the amount of SiH groups is below this lower limit, the curability may decrease. On the other hand, when it is larger than

this upper limit, the release force of the resulting cured coating may become larger.

Component (C) is exemplified by, but not limited to, the following compounds. In the formulas below, Me stands for a methyl group. The bonding order of the siloxane units shown in parentheses is not limited to those shown below.

$(Me_3SiO_{1/2})_2(MeHSiO_{2/2})_{35}$

$(Me_3SiO_{1/2})_2(MeHSiO_{2/2})_{45}(Me_2SiO_{2/2})_{20}$

$(Me_2HSiO_{1/2})_2(MeHSiO_{2/2})_{40}(Me_2SiO_{2/2})_{20}$

$(Me_3SiO_{1/2})_2(MeHSiO_{2/2})_{50}(Me_2SiO_{2/2})_{30}$

$(Me_3SiO_{1/2})_5(MeHSiO_{2/2})_{60}(MeSiO_{3/2})_3$

Component (C) is included in an amount such that the ratio of the number of SiH groups in component (C) relative to the total number of alkenyl groups in components (A) and (B) is from 0.1 to 5, preferably from 0.3 to 4, and more preferably from 0.5 to 3. When this ratio is smaller than the above lower limit value, the curability decreases. When it is larger than the above upper limit, the release force of the resulting cured coating becomes larger.

[Component (D)]

Component (D) is an organohydrogenpolysiloxane having at least three silicon-bonded hydrogen atoms per molecule and an aryl group, the ratio of the total number of the aryl groups to the total number of all substituents bonded to silicon atoms being from 6 to 50%, and having a SiH group content of at least 0.7 mol/100 g and not more than 2.0 mol/100 g. The aryl groups are at least one of the following: aryl groups bonded to a silicon atom or aryl groups having an aralkyl group bonded to a silicon atom. The organohydrogenpolysiloxane may be of one type used alone or two or more may be used together.

The organohydrogenpolysiloxane (D) is represented by, for example, average empirical formula (4) below

$$R^6_kH_lSiO_{(4-k-l)/2} \qquad (4)$$

(wherein each $R^6$ is independently a hydroxyl group or a substituted or unsubstituted monovalent hydrocarbon group without an aliphatic unsaturated bond, a number of $R^6$ groups that is from 6 to 50% of the sum of the total number of $R^6$ and the number of silicon-bonded hydrogen atoms being aryl groups, and the subscripts 'k' and '$l$' are positive numbers larger than 0, such that $0 < k+l \leq 3$).

In formula (4), the monovalent hydrocarbon group of $R^6$ is exemplified by alkyl groups of preferably 1 to 6 carbon atoms, such as methyl, ethyl, propyl and butyl groups; cycloalkyl groups of preferably 5 to 8 carbon atoms such as the cyclohexyl group; aryl groups of preferably 6 to 10 carbon atoms such as phenyl and tolyl groups; aralkyl groups of preferably 7 to 10 carbon atoms such as the benzyl group; and monovalent hydrocarbon groups of 1 to 10 carbon atoms in which some or all hydrogen atoms bonded to carbon atoms on any of these groups are substituted with hydroxyl groups, cyano groups, halogen atoms, alkoxysilyl groups, polyoxyalkylene groups, epoxy groups and carboxyl groups. At least one $R^6$ is an aryl group or an aralkyl group, and preferably an aryl group. Of these, $R^6$ is preferably an alkyl or aryl group; methyl, ethyl, propyl and phenyl groups are more preferred.

In formula (4), the subscript 'k' is a positive number that is greater than 0, preferably from 0.1 to 2, and the subscript '$l$' is a positive number that is greater than 0, preferably from 0.1 to 3, such that k and $l$ satisfy the condition $0 < k+l \leq 3$, and preferably $0.5 < k+l \leq 2.9$.

The organohydrogenpolysiloxane represented by formula (4) is exemplified by polymers and copolymers containing, for example, at least one type of unit from among $R^6HSiO_{2/2}$ units, $HSiO_{3/2}$ units and $R^6_2HSiO_{1/2}$ units, and may additionally include at least one type of unit from among $R^6_2SiO_{2/2}$ units, $R^6SiO_{3/2}$ units and $R^6_3SiO_{1/2}$ units. $R^6$ is as described above. The sum of the $R^6HSiO_{2/2}$ units and $R^6_2HSiO_{1/2}$ units per molecule is preferably at least 3, and more preferably at least 5. Also, $SiO_{4/2}$ units may be included in an amount that does not detract from the advantageous effects of the invention.

Component (D) has an amount of aryl groups such that the ratio (%) of the number of aryl groups relative to the total number of all substituents bonded to silicon atoms is from 6 to 50%, preferably from 7 to 40%, and more preferably from 8 to 30%. When this ratio is smaller than the lower limit value here, the adherence decreases. When the ratio is larger than the upper limit value, the compatibility worsens and there is a possibility that the curability will decrease. The number of these aryl groups, as noted above, also includes the number of aryl groups having an aralkyl group. As used herein, "all substituents" bonded to silicon atoms refers to, for example, alkyl groups substituted with

silicon-bonded hydrogen atoms, hydroxyl groups, alkyl groups, aryl groups, aralkyl groups, halogen atoms and the like.

The number of SiH groups in component (D) is such that the SiH group content is at least 0.7 mol/100 g and not more than 2.0 mol/100 g, and is preferably at least 0.8 mol/100 g and not more than 1.8 mol/100 g. When the SiH group content is below this lower limit, the curability and adherence decrease. On the other hand, when it is larger than this upper limit, the release force of the resulting cured coating becomes larger.

Component (D) has a viscosity at 25°C of preferably from 0.001 to 10 Pa·s, and more preferably from 0.005 to 5 Pa·s. When the viscosity is too low, the curability may decrease; when it is too high, the workability of the composition may decrease.

Component (D) is exemplified by, but not limited to, the following compounds. In the formulas below, Me stands for a methyl group and Ph stands for a phenyl group. The bonding order of the siloxane units shown in parentheses are not limited to those shown below.

$(Me_3SiO_{1/2})_2(Ph_2SiO_{2/2})_{10}(MeHSiO_{2/2})_{35}$

$(Me_3SiO_{1/2})_2(MePhSiO_{2/2})_{20}(MeHSiO_{2/2})_{60}$

$(Me_3SiO_{1/2})_2(Ph_2SiO_{2/2})_5(Me_2SiO_{2/2})_5(MeHSiO_{2/2})_{40}$

$(Me_2HSiO_{1/2})_5(Ph_2SiO_{2/2})_7(Me_2SiO_{2/2})_5(MeHSiO_{2/2})_{40}(MeSiO_{3/2})_3$

$(Me_3SiO_{1/2})_3(Ph_2SiO_{2/2})_{10}(MeHSiO_{2/2})_{40}(PhSiO_{3/2})_1$

Component (D) is included in an amount such that the ratio of the number of SiH groups in component (D) with respect to the total number of alkenyl groups in components (A) and (B) is from 0.1 to 5, preferably from 0.3 to 4, and more preferably from 0.5 to 3. When this ratio is smaller than the lower limit value here, the curability and adherence decrease. On the other hand, when it is larger than the upper limit value, the release force of the resulting cured coating becomes larger.

The ratio of the number of SiH groups in Components (C) and (D) with respect to the total number of alkenyl groups in components (A) and (B) is preferably from 0.2 to 5, more preferably from 0.3 to 4, and even more preferably from 0.5 to 3.5. When this ratio is smaller than the lower limit value here, the curability and adherence may decrease. On the other hand, when it is larger than the upper limit value, the release force of the resulting cured coating may become larger.

[Component (E)]

The platinum group metal catalyst serving as component (E) is a catalyst for promoting addition reactions of components (A) and (B) with components (C) and (D). The catalyst should be one that promotes a hydrosilylation reaction; a known catalyst may be used. Exemplary platinum group metal catalysts include platinum-based, palladium-based, rhodium-based and ruthenium-based catalysts. Of these, the use of platinum-based catalysts is especially preferred. Examples of such platinum-based catalysts include chloroplatinic acid, alcohol solutions or aldehyde solutions of chloroplatinic acid, and complexes of chloroplatinic acid or platinum with various olefins or with vinyl siloxanes.

The content of component (E) should be a catalytic amount. As used here, "catalytic amount" refers to an amount that promotes addition reactions of components (A) and (B) with components (C) and (D). To obtain a good cured coating, the platinum group metal catalyst is included in an amount, based on the platinum group metal weight, which is preferably from 1 to 5,000 ppm, and more preferably from 10 to 1,000 ppm, of the weight of component (A).

[Component (F)]

The silicone composition of the invention includes (F) an organic solvent. By diluting the composition with an organic solvent, it is possible to uniformly mix components (A) to (E), which has the practical advantages of improving the coatability of the composition and improving the condition of the applied coating, such as the thickness of the applied coating and the surface finished state.

Organic solvents that may be used as component (F) include aromatic hydrocarbon compounds such as toluene and xylene; aliphatic hydrocarbon compounds such as hexane, heptane and isoparaffin; ketone compounds such as acetone, methyl ethyl ketone and methyl isobutyl ketone; ester compounds such as ethyl acetate and butyl acetate; and ether compounds such as diisopropyl ether and 1,4-dioxane, although use can be made of any compound that is capable of dissolving silicone. These may be of one type used alone or two or more types may be used in suitable combination.

The amount of component (F) included per 100 parts by weight of component (A) is preferably from 50 to 20,000

parts by weight, and more preferably from 100 to 10,000 parts by weight. At a component (F) content below 50 parts by weight, the advantages attributable to dilution may not be obtainable; at more than 20,000 parts by weight, further improvement in the advantageous effects is unlikely.

The silicone composition of the invention can be obtained by compounding the specified amounts of components (A) to (F), although other optional ingredients may be added where necessary within ranges that do not detract from the objects and advantageous effects of the invention. Known ingredients that are commonly used in silicone release agent compositions may be added in the normal amounts.

[Component (G)]

The silicone composition of the invention may optionally include an antistatic agent (G) in order to prevent electrostatic charging and impart electrical conductivity. Non-limiting examples of component (G) include ionic compounds, conductive polymeric compounds, conductive fillers and surfactants. One such type may be used alone or two or more may be used together. Of these, conductive polymeric compounds are preferred because the conductivity is not moisture dependent and bleedout does not occur.

Ionic compounds are compounds made up of one or more anionic component and one or more cationic component, and are exemplified by metallic salts and organic salts. These may be used singly or two or more may be used together.

Metallic salts are exemplified by salts composed of a cationic component such as a lithium, sodium or potassium ion and an anionic component. Organic salts are exemplified by salts composed of a cationic component such as a pyridinium, imidazolium, ammonium, sulfonium or phosphonium ion and an anionic component.

The anionic component may be either an inorganic anion or an organic anion, although an anionic component containing fluorine atoms is preferred because of the excellent antistatic performance. Examples of fluorine atom-containing anionic components include the hexafluorophosphate anion ($PF_6^-$), the bis(trifluoromethanesulfonyl)imido anion $[CF_3SO_2]_2N^-]$, the bis(fluorosulfonyl)imido anion $[(FSO_2)_2N^-]$ and the tetra(pentafluorophenyl)borate anion $[(C_6F_5)_4B^-]$.

Conductive polymeric compounds are compounds having a π-conjugated conductive polymer and a polyanion. One such compound may be used alone or two or more may be used in suitable combination.

A π-conjugated conductive polymer may be used provided it is an organic polymer in which the backbone is composed of a π-conjugated system. Examples include polypyrroles, polythiophenes, polyacetylenes, polyphenylenes, polyphenylene vinylenes, polyanilines, polyacenes, polythiophene vinylenes and copolymers of these. From the standpoint of their good electrical conductivity and their excellent stability in air, polypyrroles, polythiophenes and polyanilines are preferred; polythiophenes are more preferred.

Polyanions may be used without particular limitation, so long as they are anionic compounds having an anionic group. The anionic group should be a functional group that can give rise to chemical oxidation doping of the π-conjugated conductive copolymer. Of these, from the standpoint of ease of production and stability, monosubstituted sulfuric acid ester groups, monosubstituted phosphoric acid ester groups, phosphoric acid groups, carboxyl groups and sulfo groups are preferred.

The conductive polymeric compound may be in the form of, for example, a liquid, a solid, an aqueous solution, an aqueous dispersion or an organic solvent solution. However, a liquid or an organic solvent solution is preferred because the solubility in the silicone composition of the invention is excellent; an organic solvent solution is more preferred.

Such a conductive polymeric compound may be prepared by a generic method, although a commercial product can also be advantageously used.

Examples of commercial conductive polymeric compounds include the Seplegyda series (Shin-Etsu Polymer Co., Ltd.), the Denatron series (Nagase ChemteX Corporation), the Verazol series (Soken Chemical & Engineering Co., Ltd.) and Aedotron polymers (TDA Research Inc.). The Seplegyda SAS-P series and Seplegyda SAS-F series (Shin-Etsu Polymer Co., Ltd.), Denatron F-100SL (Nagase ChemteX Corporation), Verazol ED-0130-M (Soken Chemical & Engineering Co., Ltd.) and Aedotron C3-PC (TDA Research Inc.), all of which are dilutable as organic solvent solutions, are preferred.

Exemplary conductive fillers include metal powders, metallic fibers, metal oxides and carbonaceous materials. Examples of the type of metal in the metal powder include silver, nickel, copper, zinc, aluminum stainless steel, iron, brass, chromium and tin. Examples of the type of metal in the metallic fibers include iron, copper, stainless steel, aluminum and brass. Examples of metal oxides include tin oxide, indium oxide and zinc oxide. Examples of carbonaceous materials include single-walled carbon nanotubes, multi-walled carbon nanotubes, carbon black, carbon nanotubes, carbon fibers and graphene. When a conductive filler is used, a carbonaceous material is preferred because of the excellent antistatic performance; single-walled carbon nanotubes and multi-walled carbon nanotubes are more preferred.

Exemplary surfactants include cationic surfactants, anionic surfactants, nonionic surfactants and amphoteric surfactants. These may be of one type used alone or two or more types may be used together.

Examples of cationic surfactants include quaternary ammonium salts, alkylamine salts and alkyl pyridinium

salts. Examples of anionic surfactants include alkyl sulfates, alkylbenzene sulfonates and alkyl phosphates. Examples of nonionic surfactants include polyoxyethylene alkyl ethers, polyoxyethylene alkyl phenyl ethers and polyoxyethylene fatty acid esters. Examples of amphoteric surfactants include alkyl betaines and alkyl imidazolines.

The content of component (G) per 100 parts by weight of component (A) is preferably from 0.1 to 50 parts by weight, and more preferably from 0.3 to 30 parts by weight. When the component (G) content is too low, an antistatic effect may not be obtained; when it is too high, the adherence may decrease.

[Pot Life Extender]

Other optional ingredients that may be used include compounds that are known as pot life extenders, such as various organonitrogen compounds, organophosphorus compounds, acetylene alcohols, oxime compounds and organochromium compounds. Examples include acetylene compounds such as 3-methyl-1-butyn-3-ol, 3,5-dimethyl-1-hexyn-3-ol, 3-methyl-1-pentyn-3-ol and 2-phenyl-3-butyn-2-ol; acetylene compounds such as 3-methyl-3-penten-1-yn and 3,5-dimethyl-3-hexen-1-yn; the reaction products of these acetylene compounds with an alkoxysilane or siloxane or a hydrogensilane; vinyl siloxanes such as cyclic tetramethylvinylsiloxane; organonitrogen compounds such as benzotriazole; and other compounds such as organophosphorus compounds, oxime compounds and organochromium compounds.

The content of the pot life extender should be an amount that enables a good pot life to be obtained. From 0.01 to 10 parts by weight per 100 parts by weight of component (A) is generally preferred.

Other optional ingredients that may be included, where necessary, within a range that does not detract from the advantageous effects of the invention include known antioxidants, easy release additives, pigments, stabilizers, antifoaming agents, adhesion promoters, thickeners and inorganic fillers such as silica.

[Method of Preparation]

From the standpoint of the pot life, the method for preparing the inventive addition-curable silicone composition for producing release paper or release film is preferably one in which components (A), (B), (C), (D), (F) and optional ingredients are uniformly premixed, following which component (E) is added just prior to use. In cases where an antistatic agent (G) is included, it is preferable to add component (G) at the time that components (A), (B), (C), (D), (F) and the optional ingredients are compounded, and carry out mixture.

[Release Paper and Release Film]

Release paper and release film have a paper substrate or film substrate and, formed on this substrate, a release layer composed of a cured product of the above silicone composition. The release layer should be formed on at least one side of the substrate, and may be formed on a single side or on both sides.

Illustrative examples of substrates include polyethylene laminated paper, glassine paper, woodfree paper, kraft paper, various types of coated papers such as clay-coated paper, synthetic papers such as Yupo, polyethylene films, polypropylene films such as CPP and OPP, polyester films such as polyethylene terephthalate film, polyamide films, polyimide films, polylactic acid films, polyphenol films and polycarbonate films. To improve the adherence of the release layer to these substrates, use may be made of a substrate whose surfaces have been corona-treated, treated by etching, or plasma-treated.

The method of producing release paper and release film may be, for example, a method that includes the step of applying the silicone composition to at least one side of a substrate, such as a single side or both sides, and the step of drying and curing this silicone composition to form a release layer. Examples of application methods include coating methods such as coating with a comma coater, lip coater, roll coater, die coater, knife coater, blade coater, rod coater, kiss coater, gravure coater or wire bar coater, and screen coating, dip coating and cast coating. The silicone composition may be used at this time either directly as is, or after dilution within the above-indicated range with the aforementioned diluting solvent or water. The coating weight, although not particularly limited, is generally, in terms of solids, from 0.01 to 100 g/$m^2$, and more preferably from 0.03 to 10 g/$m^2$. Exemplary drying methods include methods that remove the volatile ingredients and solvent ingredients by heating. Specific examples include hot-air dryers and infrared dryers. Or the composition may be left to stand as is at room temperature. A conventional method is used as the curing method. The curing temperature is preferably between 50 and 200°C, and more preferably between 70 and 180°C. The curing time is preferably from 1 to 120 seconds, and more preferably from 5 to 90 seconds. In cases where a release layer is produced on both sides of the substrate, it is preferable to carry out the cured coating-forming operation on one side of the substrate at a time.

EXAMPLES

Examples according to the invention and Comparative Examples are given below to more concretely illustrate the invention, although the invention is not limited by these Examples. In the formulas below, the viscosities are values measured with a Brookfield viscometer (Toki Sangyo Co., Ltd.; model: TVB-10M), "Me" stands for methyl group, "Vi" stands for a vinyl group and "Ph" stands for a phenyl group.

<Starting Materials>

[Component (A)]

(A-1)

An organopolysiloxane of the following formula which has a viscosity at 25°C, as a 30 wt% toluene solution, of 7 Pa·s and an alkenyl group content of 0.01 mol/100 g:

$$(Vi_3SiO_{1/2})_2(ViMeSiO_{2/2})_{24}(Me_2SiO_{2/2})_{4,000}$$

(A-2) (for comparison)

An organopolysiloxane of the following formula which has a viscosity at 25°C, as a 30 wt% toluene solution, of 7 Pa·s and an alkenyl group content of 0.01 mol/100 g:

$$(ViMe_2SiO_{1/2})_2(ViMeSiO_{2/2})_{28}(Me_2SiO_{2/2})_{4,000}$$

[Component (B)]

(B-1)

An organopolysiloxane of the following formula which has a viscosity at 25°C of 0.02 Pa·s and an alkenyl group content of 0.67 mol/100 g:

$$(ViMe_2SiO_{1/2})_{12}(MeSiO_{3/2})_{10}$$

(B-2) (for comparison)

An organopolysiloxane of the following formula which has a viscosity at 25°C of 0.008 Pa·s and an alkenyl group content of 0.22 mol/100 g:

$$(ViMe_2SiO_{1/2})_2(Me_2SiO_{2/2})_{10}$$

(B-3) (for comparison)

An organopolysiloxane of the following formula which has a viscosity at 25°C of 0.06 Pa·s and an alkenyl group content of 0.06 mol/100 g:

$$(ViMe_2SiO_{1/2})_2(Me_2SiO_{2/2})_{40}$$

[Component (C)]

(C-1)

An organohydrogenpolysiloxane of the following formula which has a viscosity at 25°C of 0.09 Pa·s and a SiH

group content of 1.0 mol/100 g:

$$(Me_3SiO_{1/2})_2(MeHSiO_{2/2})_{45}(Me_2SiO_{2/2})_{20}$$

(C-2)

An organohydrogenpolysiloxane of the following formula which has a viscosity at 25°C of 0.02 Pa·s and a SiH group content of 1.6 mol/100 g:

$$(Me_3SiO_{1/2})_2(MeHSiO_{2/2})_{35}$$

[Component (D)]

(D-1)

An organohydrogenpolysiloxane of the following formula which has a viscosity at 25°C of 0.2 Pa·s, a SiH group content of 1.0 mol/100 g and a ratio of the number of aryl groups to the total number of all substituents bonded to silicon atoms of 9.4%:

$$(Me_3SiO_{1/2})_2(Ph_2SiO_{2/2})_5(Me_2SiO_{2/2})_5(MeHSiO_{2/2})_{40}$$

(D-2)

An organohydrogenpolysiloxane of the following formula which has a viscosity at 25°C of 0.4 Pa·s, a SiH group content of 0.8 mol/100 g and a ratio of the number of aryl groups to the total number of all substituents bonded to silicon atoms of 20.8%:

$$(Me_3SiO_{1/2})_2(Ph_2SiO_{2/2})_{10}(MeHSiO_{2/2})_{35}$$

(D-3) (for comparison)

An organohydrogenpolysiloxane of the following formula which has a viscosity at 25°C of 0.5 Pa·s, a SiH group content of 0.6 mol/100 g and a ratio of the number of aryl groups to the total number of all substituents bonded to silicon atoms of 18.9%:

$$(Me_3SiO_{1/2})_2(Ph_2SiO_{2/2})_{10}(Me_2SiO_{2/2})_{10}(MeHSiO_{2/2})_{30}$$

[Component (E)]

A platinum-vinyl siloxane complex, as a catalyst

[Component (F)]

A mixed solvent of toluene and methyl ethyl ketone (MEK) in a weight ratio of 1:1

[Component (G)]

A conductive polymeric compound: Seplegyda SAS-F14 (Shin-Etsu Polymer Co., Ltd.; an MEK solution of a polythiophene conductive polymer; amount of active ingredient, 0.8 wt%)

[Optional Ingredient]

3-Methyl-1-butyn-3-ol, as a pot life extender

<Examples 1 to 4, Comparative Examples 1 to 10>

Silicone compositions for coating were prepared as follows using above components (A) to (F) and optional ingredients as the starting materials.

Components (A), (B), (C), (D) and (G) were placed in a flask in the proportions shown in Tables 1 and 2, following which 3,200 parts by weight of component (F) and 3 parts by weight of optional ingredients were added and dissolution was carried out by mixing.

Component (E) was added to the resulting solution in an amount, based on the platinum weight relative to component (A), of 100 ppm and mixed under stirring, thereby giving the silicone composition for coating. Using this composition, coated articles were produced by the subsequently described method and were then evaluated.

<Evaluations>

The curability, force required for release (referred to below as the "release force"), subsequent adhesion ratio, adherence and surface resistivity were evaluated or measured by the following methods for the release agent in each Example. The results are presented in Tables 1 and 2.

[Curability (Adherence Immediately after Cure)]

The resulting composition was applied onto a 38 μm thick PET film using a bar coater and then heated for 30 seconds in a 100°C hot-air dryer, forming a release layer. The coating weight (solids) at this time was set to 0.2 $g/m^2$. This release layer was then rubbed ten times with a finger, following which the presence or absence of clouding and shedding was visually observed and rated according to the following criteria.

A: Clouding and shedding were not observed
B: Slight clouding and shedding were observed
C: Clouding or shedding was observed

[Release Force]

The resulting composition was applied onto a 38 μm thick PET film using a bar coater and heated for 30 seconds in a 120°C hot-air dryer, forming a release layer. The coating weight (solids) at this time was set to 0.2 $g/m^2$. The release force was evaluated as follows in accordance with the FINAT method.

Pressure-sensitive adhesive tape having a width of 25 cm (Tesa 7475 tape, a trade name of Tesa Tape Inc.) was attached to the surface of the release layer, and a load of 70 $g/cm^2$ was applied for 20 hours within a 25°C dryer. Next, a tensile testing machine (AGS-50G, from Shimadzu Corporation) was used to pull off the Tesa 7475 tape at an angle of 180° and a peel rate of 0.3 m/min, and the force (N/25 mm) required to peel off the tape was measured. A release force of 0.15 N/25 mm or less is small and can be regarded as good.

[Subsequent Adhesion Ratio]

• Tesa 7475 tape

A release layer was formed in the same way as in the above release force evaluation, pressure-sensitive adhesive tape having a width of 25 cm (Tesa 7475 tape, a trade name of Tesa Tape Inc.) was attached to the surface of the release layer, and a load of 70 $g/cm^2$ was applied for 20 hours within a 25°C dryer. The 25 mm wide pressure-sensitive adhesive tape was then peeled from the release layer and this adhesive tape was attached to a stainless steel plate. Next, using a tensile testing machine (AGS-50G, from Shimadzu Corporation), the 25 mm wide pressure-sensitive adhesive tape was peeled from the stainless steel plate and the peel strength X was measured.

In addition, a 25 mm wide pressure-sensitive adhesive tape not laminated to a release layer was attached to a stainless steel plate and, using the tensile testing machine, the 25 mm wide pressure-sensitive adhesive tape was peeled from the stainless steel plate and the peel strength Y was measured.

The subsequent adhesion ratio was determined from the following formula.

$$(\text{peel strength X} / \text{peel strength Y}) \times 100\ (\%)$$

[Adherence]

A release layer formed in the same way as in the above release force evaluation was taken out after 7 days of aging under 60°C, 90% RH conditions, and the cured silicone coating surface of the release layer was rubbed ten times back-and-forth with the ball of the finger. Samples with no shedding (peeling away of film) were rated as A, samples with some shedding were rated as B, and samples with complete shedding were rated as C.

[Surface Resistivity]

The surface resistivity of a release layer formed in the same way as in the above release force evaluation was measured with the Hirester-up MCP-HT 450 (trade name) surface resistivity meter from Mitsubishi Chemical Corporation. Measurement was carried out under the following conditions: applied voltage, 10 V; voltage application time, 10 seconds. At a surface resistivity of $1.0\times10^{10}$/□ or less, a good antistatic resistance can be obtained.

[Table 1]

| Ingredient contents (pbw) | Example | | Comparative Example | | | | |
|---|---|---|---|---|---|---|---|
| | 1 | 2 | 1 | 2 | 3 | 4 | 5 |
| (A-1) | 100 | 100 | 100 | 100 | | 100 | 100 |
| (A-2) | | | | | 100 | | |
| (B-1) | 2.4 | | 1.6 | 2.4 | 2.4 | | 2.4 |
| (B-2) | | 6 | | | | | |
| (B-3) | | | | | | 3 | |
| (C-1) | 3 | | | 4 | 3 | 2 | 8 |
| (C-2) | | 3 | | | | | |
| (D-1) | 3 | | | | 3 | 1 | |
| (D-2) | | 3 | 6 | | | | |
| (D-3) | | | | 4 | | | |
| (G) | | | | | | | |
| Amount of Vi (mol) in components (A) and (B) | 0.026 | 0.023 | 0.021 | 0.026 | 0.026 | 0.012 | 0.026 |
| Amount of H (mol) in component (C) | 0.031 | 0.046 | 0.000 | 0.041 | 0.031 | 0.021 | 0.083 |
| Amount of H (mol) in component (D) | 0.031 | 0.025 | 0.049 | 0.026 | 0.031 | 0.010 | 0.000 |
| H/Vi (component (C)/[components (A) and (B)] | 1.2 | 2.0 | 0.0 | 1.6 | 1.2 | 1.7 | 3.2 |
| H/Vi (component (D)/[components (A) and (B)] | 1.2 | 1.1 | 2.4 | 1.0 | 1.2 | 0.9 | 0.0 |
| Results | | | | | | | |
| Release force (N/25 mm) | 0.13 | 0.14 | 0.11 | 0.13 | 0.14 | 0.11 | 0.16 |
| Subsequent adhesion ratio (%) | 98 | 99 | 98 | 100 | 99 | 94 | 97 |
| Curability | A | A | B | B | B | A | B |
| Adherence | A | A | A | B | A | B | C |

[Table 2]

| Ingredient contents (pbw) | Example | | Comparative Example | | | | |
|---|---|---|---|---|---|---|---|
| | 3 | 4 | 6 | 7 | 8 | 9 | 10 |
| (A-1) | 100 | 100 | 100 | 100 | | 100 | 100 |
| (A-2) | | | | | 100 | | |

(continued)

| Ingredient contents (pbw) | Example | | Comparative Example | | | | |
|---|---|---|---|---|---|---|---|
| | 3 | 4 | 6 | 7 | 8 | 9 | 10 |
| (B-1) | 2.4 | | 1.6 | 2.4 | 2.4 | | 2.4 |
| (B-2) | | 6 | | | | | |
| (B-3) | | | | | | 3 | |
| (C-1) | 3 | | | 4 | 3 | 2 | 8 |
| (C-2) | | 3 | | | | | |
| (D-1) | 3 | | | | 3 | 1 | |
| (D-2) | | 3 | 6 | | | | |
| (D-3) | | | | 4 | | | |
| (G) | 300 | 300 | 300 | 300 | 300 | 300 | 300 |
| Amount of Vi (mol) in components (A) and (B) | 0.026 | 0.023 | 0.021 | 0.026 | 0.026 | 0.012 | 0.026 |
| Amount of H (mol) in component (C) | 0.031 | 0.046 | 0.000 | 0.041 | 0.031 | 0.021 | 0.083 |
| Amount of H (mol) in component (D) | 0.031 | 0.025 | 0.049 | 0.026 | 0.031 | 0.010 | 0.000 |
| H/Vi (component (C)/[components (A) and (B)] | 1.2 | 2.0 | 0.0 | 1.6 | 1.2 | 1.7 | 3.2 |
| H/Vi (component (D)/[components (A) and (B)] | 1.2 | 1.1 | 2.4 | 1.0 | 1.2 | 0.9 | 0.0 |
| Results | | | | | | | |
| Surface resistivity (Ω/□) | $2\times10^9$ | $5\times10^9$ | $7\times10^9$ | $1\times10^9$ | $4\times10^9$ | $5\times10^9$ | $3\times10^9$ |
| Curability | A | A | B | B | B | A | B |
| Adherence | A | A | A | C | A | C | C |

As demonstrated in Examples 1 and 2 in Table 1, the silicone compositions of the invention have a low release force and excellent curability and adherence. Also, as demonstrated by Examples 3 and 4 in Table 2, the silicone compositions of the invention, even when an antistatic agent is included therein, exhibit a good antistatic performance without undergoing a decrease in adherence. Hence, cured coatings obtained from the silicone compositions of the invention can be advantageously used in release films and the like.

## Claims

**1.** An addition-curable silicone composition for producing release paper or release film, comprising:

(A) 100 parts by weight of an organopolysiloxane of formula (1) below

[Chem. 1]

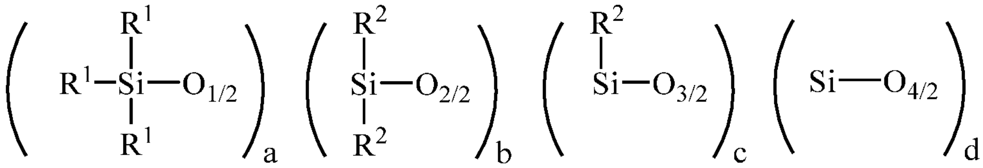

(1)

(wherein $R^1$ are like or unlike alkenyl groups of 2 to 12 carbon atoms which may have an intervening oxygen atom, $R^2$ are like or unlike groups selected from substituted or unsubstituted monovalent hydrocarbon groups of 1 to 20 carbon atoms which have no aliphatic unsaturated bonds and alkenyl groups of 2 to 12 carbon atoms

which may have an intervening oxygen atom, and the subscripts 'a' to 'd' are integers which respectively satisfy the conditions $2 \le a \le 30$, $400 \le b \le 20{,}000$, $0 \le c \le 20$ and $0 \le d \le 15$) which has an alkenyl group content of from 0.001 to 0.03 mol/100 g and a viscosity at 25°C as a 30 wt% toluene solution of from 0.01 to 70 Pa·s;
(B) from 0.1 to 20 parts by weight of an organopolysiloxane of formula (2) below

[Chem. 2]

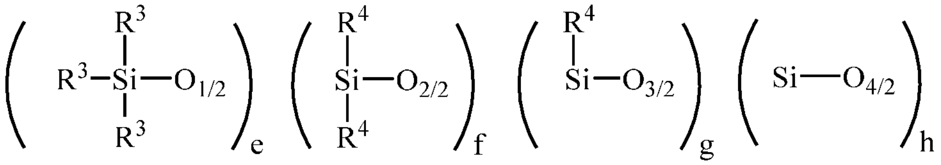

(2)

(wherein $R^3$ are like or unlike groups selected from substituted or unsubstituted monovalent hydrocarbon groups of 1 to 20 carbon atoms which have no aliphatic unsaturated bonds and alkenyl groups of 2 to 12 carbon atoms which may have an intervening oxygen atom, at least two occurrences of $R^3$ being alkenyl groups of 2 to 12 carbon atoms which may have an intervening oxygen atom, $R^4$ are like or unlike substituted or unsubstituted monovalent hydrocarbon groups of 1 to 20 carbon atoms which have no aliphatic unsaturated bonds, and the subscripts 'e' to 'h' are integers which respectively satisfy the conditions $2 \le e \le 30$, $0 \le f \le 60$, $0 \le g \le 20$ and $0 \le h \le 10$) which has at least two alkenyl groups per molecule, an alkenyl group content of from 0.1 to 1.0 mol/100 g and a viscosity at 25°C of from 0.001 to 1 Pa·s;
(C) an organohydrogenpolysiloxane which has at least three silicon-bonded hydrogen atoms per molecule and no aryl groups, in an amount such that the ratio of the number of SiH groups on component (C) to the total number of alkenyl groups in components (A) and (B) is from 0.1 to 5;
(D) an organohydrogenpolysiloxane having at least three silicon-bonded hydrogen atoms per molecule and an aryl group, the ratio of the total number of the aryl groups to the total number of all substituents bonded to silicon atoms being from 6 to 50%, and having a SiH group content of at least 0.7 mol/100 g and not more than 2.0 mol/100 g, in an amount such that the ratio of the number of SiH groups in component (D) to the total number of alkenyl groups in components (A) and (B) is from 0.1 to 5;
(E) a catalytic amount of a platinum group metal catalyst; and
(F) from 50 to 20,000 parts by weight of an organic solvent.

2. The addition-curable silicone composition for producing release paper or release film of claim 1, wherein the amount of SiH groups in component (C) is at least 0.7 mol/100 g and not more than 2.0 mol/100 g.

3. The addition-curable silicone composition for producing release paper or release film of claim 1 or 2, wherein $R^1$ in component (A) is an alkenyl group of 2 to 8 carbon atoms.

4. The addition-curable silicone composition for producing release paper or release film of claim 3, wherein $R^1$ in component (A) is a vinyl group.

5. The addition-curable silicone composition for producing release paper or release film of any one of claims 1 to 4, further comprising (G) an antistatic agent.

6. The addition-curable silicone composition for producing release paper or release film of claim 5, wherein component (G) is a conductive polymeric compound.

7. Release paper or release film obtained by formation of a cured product of the silicone composition of any one of claims 1 to 6 on a paper substrate or film substrate.

**INTERNATIONAL SEARCH REPORT**

International application No.
PCT/JP2021/004007

A. CLASSIFICATION OF SUBJECT MATTER
B32B 27/00(2006.01)i; C08L 83/05(2006.01)i; C08L 83/07(2006.01)i; C08L 101/12(2006.01)i; C09D 183/07(2006.01)i; C09K 3/00(2006.01)i; C09D 7/01(2018.01)i; B32B 7/00(2019.01)i
FI: C09K3/00 R; C08L83/07; C08L83/05; C08L101/12; B32B7/06; B32B27/00 101; B32B27/00 L; C09D183/07; C09D7/61
According to International Patent Classification (IPC) or to both national classification and IPC

B. FIELDS SEARCHED
Minimum documentation searched (classification system followed by classification symbols)
B32B27/00; C08L83/05; C08L83/07; C08L101/12; C09D183/07; C09K3/00; C09D7/61; B32B7/06

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2018/190012 A1 (SHIN-ETSU CHEMICAL CO., LTD.) 18 October 2018 (2018-10-18) claims, examples 1-10 | 1-7 |
| A | JP 2017-25135 A (SHIN-ETSU CHEMICAL CO., LTD.) 02 February 2017 (2017-02-02) claims, examples 1-14 | 1-7 |
| A | WO 2016/199561 A1 (SHIN-ETSU CHEMICAL CO., LTD.) 15 November 2016 (2016-11-15) claims, examples 1-19 | 1-7 |
| A | JP 2003-201855 A (WACKER ASAHIKASEI SILICONE CO., LTD.) 19 September 2003 (2003-09-19) claims, example 1 | 1-7 |

☒ Further documents are listed in the continuation of Box C.　　☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 30 March 2021 (30.03.2021) | 13 April 2021 (13.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/004007

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-053875 A (DOW CORNING TORAY SILICONE CO., LTD.) 28 February 1995 (1995-02-28) claims, example 1 | 1-7 |

Form PCT/ISA/210 (continuation of second sheet) (January 2015)

**INTERNATIONAL SEARCH REPORT**
Information on patent family members

International application No.
PCT/JP2021/004007

| Patent Documents referred in the Report | Publication Date | Patent Family | Publication Date |
|---|---|---|---|
| WO 2018/190012 A1 | 18 Oct. 2018 | CN 110494529 A<br>KR 10-2019-0131474 A<br>TW 201843237 A | |
| JP 2017-25135 A | 02 Feb. 2017 | US 2019/0002746 A1<br>claims, examples 1-14<br>EP 3323867 A1<br>TW 201716236 A<br>CN 107849430 A<br>KR 10-2018-0029053 A | |
| WO 2016/199561 A1 | 15 Nov. 2016 | US 2018/0155877 A1<br>claims, examples 1-19<br>EP 3305868 A1<br>CN 107636108 A<br>KR 10-2018-0016482 A<br>TW 201715009 A | |
| JP 2003-261855 A | 19 Sep. 2003 | (Family: none) | |
| JP 7-053875 A | 28 Feb. 1995 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S4732072 A
- JP S3513709 B
- JP S54162787 A
- JP HI1193366 A
- JP 6418326 B
- JP 6324250 B
- JP H11193366 A